# EUROPEAN PATENT SPECIFICATION

(11) **EP 1 637 479 B1**
(45) Date of publication and mention of the grant of the patent: **18.07.2007**
(21) Application number: 05380193.2
(22) Date of filing: 07.09.2005
(51) Int. Cl.: B65G 1/14

(54) **Stacking column for frames for the storage and transport of components of planar structure**
Stapelsäule für einen Lager- und Transportrahmen für ebene Teile
Colonne d'empilage d'un cadre de transport et de stockage de pièces planiformes

(30) Priority: 09.09.2004 ES 200402163
(43) Date of publication of application: 22.03.2006
(73) Proprietor: Mondejar Jiménez, Josefina, 31620 Olaz Valle de Egues Navarra (ES)
(72) Inventor: Mondejar Jiménez, Josefina, 31620 Olaz Valle de Egues Navarra (ES)
(74) Representative: Carvajal y Urquijo, Isabel

(56) References cited:
- WO-A-93/01999

## Description

The present invention refers to a column for forming frames for the storage and transport of components of planar structure, especially components of the same format, for example motor vehicle bodywork components or parts.

These storage and transport frames include two or more parallel columns having arms between which the components to be transported are placed in a parallel position.

The column of the invention is of the type comprising a channelled body, with a U section, having on one of its walls transverse slots, and on the opposite, openings facing the slots, between the openings and slots of which are assembled blades or arms which may tilt between an extracted position, in which they rest against longitudinal stops of the channelled body, and a retracted position, in which they are folded upwardly on said stops, said body further having an outer longitudinal angle along one of its walls which projects frontally with respect to the longitudinal stops of the blades and serves as a guide for the parts to be stored. A column of the type set forth is described in Spanish utility model No. 1038290 and in WO 93/01999. As described in said model, the column is made up of a channelled body, with a U section, a flat bar which is fixed along the inner surface of the wall having the transverse slots, and an angle which is fixed along the outer surface of the same wall. The function of the angle is to limit with the bottom of the slots the passage of the shaft of the blades and to serve as a guide for the parts to be transported. The function of the flat bar is to define one of the stops for the blades.

With this makeup, each column is formed by three parts which are joined to each other by welding or by screws. The cost of the column, therefore, will correspond to that of the forming of said three parts and the assembly thereof.

On the other hand, the blades or arms are connected, each to consecutive ones, by transmission tie rods which go through said blades through openings and are retained, at least with one of the blades, by means of clips insertable through holes in the transmission tie rods.

The object of the present invention is to reduce the costs of the column by means of reducing the number of components thereof, which allows reducing costs both by forming a smaller number of components and by assembling the same, also in a smaller number.

On the other hand, the invention allows obtaining more robust columns, which will serve either to form frames capable of transporting and supporting heavier components or to reduce the section of the channelled body, whereupon the reduction of the cost of the columns and the weight of the frame will be achieved.

According to the present invention, the channelled body and said angle, which serves as a guide for the parts to be stored, form a single piece. The longitudinal angle is obtained as a frontal longitudinal extension of the wall having the transverse slots, extension having a transverse fold at approximately 90°, which is located on the outside of the longitudinal edge of the other wall and determines an outer longitudinal wing which will serve as a guide for the parts to be transported. Along the inner surface of this same wall a flat bar is fixed, the outer edge of which defines the stop of one side for the blades, whereas the inner edge of said flat bar limits with the bottom of the slots the passage for the shaft of said blades.

Therefore, according to the invention, the column is made up only by two parts, one forming the channelled body of a U section and the outer angle which acts as a guide for the parts to be stored, and another made up by the flat bar, which is welded to the inner surface of one of the walls of the channelled body and which serves a double function, such as that of constituting the stop of the corresponding side for the tilting blades or arms, and another that of limiting with the bottom of the slots the passage of the shafts of said blades.

With this makeup the process of forming the angle and joining it to the channelled body is eliminated.

On the other hand, by completing the channelled body with the extension of the corresponding wall and the external wing in a right angle more robustness is achieved, with greater inertia, which will allow either having more robust columns or reducing the thickness of the material making up the channelled body, with the corresponding reduction in material weight and costs.

According to another feature of the invention, the tie rods connecting consecutive blades consist of flat bars which are finished on one of their ends in a coplanar wing which projects perpendicularly from one of the longitudinal edges and on the opposite end in two wings which are close to each other, perpendicularly projecting from the opposite edge. These wings serve as stops or retaining elements of the tie rods in the blade.

The features and advantages of the invention will be better understood with the following description, made in reference to the attached drawings, in which a nonlimiting embodiment example is shown.

In the drawings:
Figure 1 shows a perspective view of a column of traditional makeup.

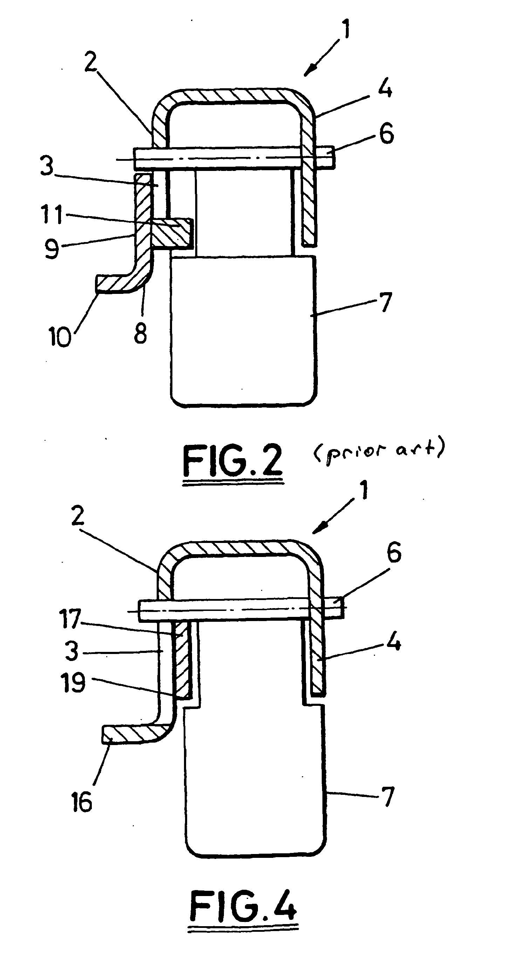

Figure 2 shows a cross section of the column of Figure 1.
Figure 3 shows a perspective view of a column made up according to the invention.
Figure 4 shows a cross section of the column of Figure 3.
Figure 5 shows a front elevational view of a tie rod of traditional makeup connecting two consecutive blades.
Figure 6 is a view similar to that of Figure 5, corresponding to a tie rod made up according to the invention.

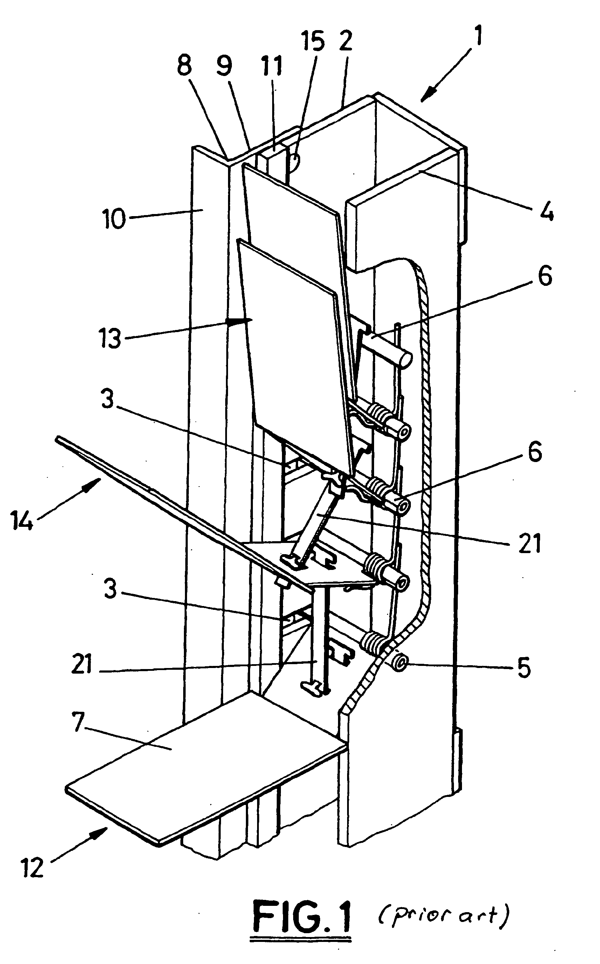

The column of Figure 1 comprises a channelled body, generally referenced with number 1, of a U section, one of the walls of which, which is referenced with number 2, has transverse slots 3 from the free edge, whereas the opposite wall has holes 5 facing the slots 3. Through each pair of aligned slot 3 and opening 5 passes the shaft 6 of a tilting blade or arm 7.

The wall 2 has an angle 8 fixed on its outer surface, the leg 9 of which limits with the bottom of the slots 3 the passage for the shafts 6, whereas the outer leg 10, noticeably perpendicular to the leg 9, defines a guide for the parts which will support the arms or blades 7 of the columns. The angle 8 has fixed to it, on the inner surface of the leg 9, a flat bar 11 which will serve, together with the free longitudinal edge of the wall 4, as a stop for the arms or blades 7.

These arms or blades can tilt between an extracted position, which in Figure 1 is indicated with number 12, and a folded position, which in the same Figure 1 is indicated with reference number 13, passing through an intermediate loading position 14.

In the extracted position 12, the blades rest on the rear edge against the longitudinal edge of the wall 4 and against the flat bar 11, which act as stops to define the extracted position. They can also rest on the same stops in the folded position 13.

The flat bar 11 can be fixed to the angle 8 by welding, whereas the angle 8 is fixed to the wall 12 of the body 1 by means of screws 15.

With the makeup described, the column is made up of the channelled body 1, the angle 8 and the flat bar 11.

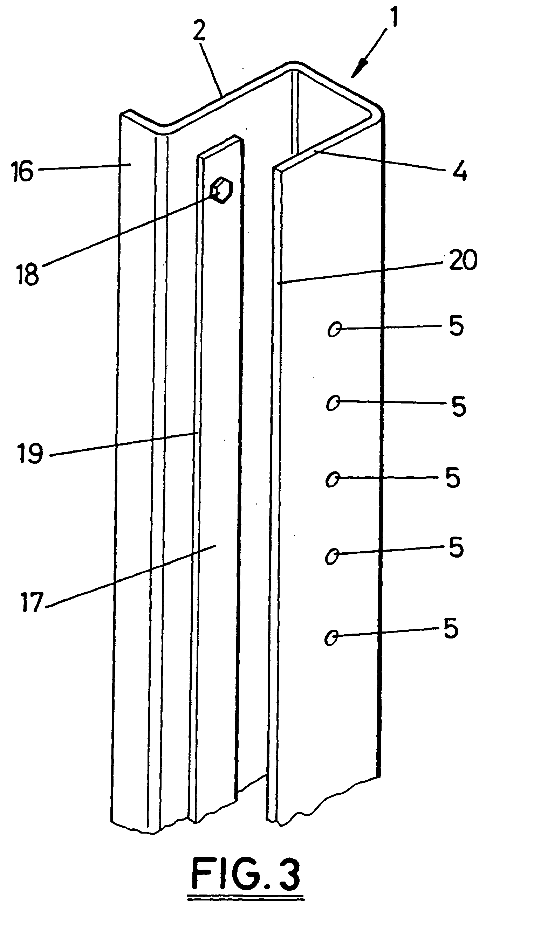

According to the present invention, the channelled body 1 and the angle 8 make up a single part, as can be observed in Figure 3. To this end, the wall 2 of the angular body 1 which includes the slots 3 extends beyond the free longitudinal edge of the wall 4 in a portion which remains folded outwards in a longitudinal wing 16 which is equivalent to the outer leg 10 of the angle 8. This wing 16 has the same function as the outer wing 10 of the profile 8, which is to serve as a guide to the parts which will be supported by the arms or blades 7.

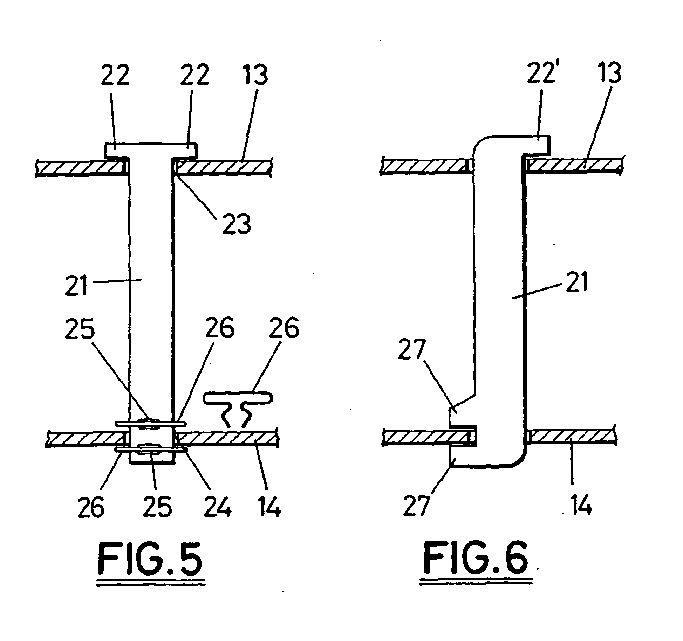

On the wall 4 of this channelled body the openings 5 will be made, which face the slots 3, Figure 4, of the opposite wall 2.

On the inner surface of the wall 2 a flat bar 17 is fixed, for example by means of screws 18. The outer longitudinal edge 19 is located in a coplanar position with the longitudinal edge 20 of the wall 4. The rear edge of this flat bar 17 defines with the bottom of the slots 3 the passage of the shafts 6.

The flat bar 17 thus performs a double function. On one hand it defines, together with the longitudinal edge 20 of the wall 4, the stops limiting the opening position 12, Figure 1, of the blades 7, and on the other hand it limits in the slots 3 the passage of the shafts 6.

Therefore, in order to form the column, it will be enough to form the channelled body 1, with the wing 16 of the walls 2 and 4 of different lengths and to fix on the inner surface of the wall 2 the flat bar 17, of a sufficient width to perform both functions set forth.

In Figure 1 it can be observed how each two consecutive blades 12-14 and 14-13 are connected by means of a transmission tie rod 21. This tie rod, as can best be seen in Figure 5, consists of a flat bar which is finished at one end in opposing wings 22, adopting a T configuration. The flat bar 21 is introduced through the openings 23 and 24 in the blades 13 and 14, the projections 22 acting as stops preventing passage through the opening 23. For retention with respect to the opening 24, the flat bar 21 has two holes 25 through which as many other retaining clips 26 are introduced.

For the purpose of reducing the number of components, according to the invention, the flat bar 21 has on one of its ends a single wing 22', coplanar with the flat bar 21, whereas in the opposite direction and from the other end it has two wings 27 close to each other. With this makeup, the flat bar 21 is introduced through the opening 24 and the opening 23 in a tilted position, until the blade 14 is embraced between the wings 27, on one hand, whereas on the other hand the wing 22' rests against the blade 13, acting as a retention stop.

The same anchoring effect of the tie rods 21 to each two blades is thus achieved, but by means of a single part, without requiring the retaining clips 26.

## Claims

1. A column for forming frames for the storage and transport of components of planar structure, comprising a channelled body (1), of U section, having on one of its walls (2) transverse slots (3), and on the opposite wall openings (5) facing the slots (3), between the pairs of openings (5) and slots (3) of which are assembled blades (7) which are connected to each other by means of transmission tie rods (21) and can tilt between an extracted position, in which they rest against longitudinal stops (17) of the channelled body (1), and a retracted position, in which they are upwardly folded on said stops (17), said body further having an outer longitudinal angle (8) along one of its walls, frontally projecting with respect to the longitudinal stops (17) of the blades (7) and serving as a guide for the parts to be stored wherein the channelled body (1) and said longitudinal angle (8) form a single part, formed from one single piece, the longitudinal angle (8) being formed by a frontal longitudinal extension of the wall (2) which has said transverse slots (3), the extension of which has a transverse fold at approximately 90° towards the outside, which is located on the outside of the longitudinal edge of the other wall (2) and determines an outer longitudinal wing to serve as a guide for the parts to be transported; and in that along the inner surface of said wall a flat bar (17) is fixed, the outer edge (19) of which defines the stop of one side of the blades (7), whereas the inner edge limits with the bottom of the slots the passage for the shaft (6) of said blades (7).

2. A column according to claim 1, **characterised in that** the tie rods (21) connecting every two consecutive blades (7) consist of flat bars ending on one end in a coplanar wing (22') which projects perpendicularly from one of the longitudinal edges, and on the opposite one in two wings (27), close to each other, which project perpendicularly from the opposite longitudinal edge.

## Patentansprüche

1. Säule zum Ausbilden von Rahmen für die Lagerung und den Transport von Komponenten von ebener Struktur, umfassend einen mit Kanal versehenen Körper (1) von U-Querschnitt, welcher an einer seiner Wände (2) Querschlitze (3) und auf der gegenüberliegenden Wand Öffnungen (5) aufweist, die den Schlitzen (3) zugewandt sind, wobei zwischen den Paaren aus Öffnungen (5) und Schlitzen (3) Lamellen (7) eingefügt sind, welche miteinander mittels Übertragungszugstangen (21) verbunden sind und welche zwischen einer ausgezogenen Position, in der sie sich gegen Längsanschläge (17) des mit Kanal versehenen Körpers (1) abstützen, und einer zurückgezogenen Position geneigt werden können, in der sie nach oben auf den Anschlägen (17) gefaltet sind, wobei der Körper des Weiteren einen äußeren Längswinkel (8) entlang einer seiner Wände aufweist, welcher nach vorne in Bezug auf die Längsanschläge (17) der Lamellen (7) vorragt und als eine Führung für die Teile, die gelagert werden sollen, dient, wobei der mit Kanal versehene Körper (1) und der Längswinkel (8) einen einzelnen Teil ausbilden, der aus einem einzigen Stück ausgebildet ist, wobei der Längswinkel (8) durch eine vordere Längserstreckung der Wand (2), welche die Querschlitze (3) aufweist, ausgebildet ist, wobei diese Erstreckung eine Querfaltung von ungefähr 90° nach außen aufweist, die auf der Außenseite der Längskante der anderen Wand (2) angeordnet ist und einen äußeren Längsflügel bestimmt, um als eine Führung für die Teile, die transportiert werden sollen, zu dienen; und dadurch, dass entlang der inneren Oberfläche der Wand ein flacher Stab (17) befestigt ist, definiert seine äußere Kante (19) den Anschlag einer Seite der Lamellen (7), wohingegen die innere Kante mit dem Boden der Schlitze den Durchgang für die Welle (6) der Lamellen (7) begrenzt.

2. Säule gemäß Anspruch 1, **dadurch gekennzeichnet, dass** die Zugstangen (21), welche jeweils zwei aufeinander folgende Lamellen (7) verbinden, aus flachen Stäben bestehen, die an einem Ende in einem koplanaren Flügel (22'), welcher senkrecht von einer der Längskanten vorragt, und am gegenüberliegenden Ende in zwei Flügel (27) enden, die nahe beieinander sind, welche senkrecht von der gegenüberliegenden Längskante vorragen.

## Revendications

1. Colonne destinée à former des cadres pour le stockage et le transport de composants à structure planaire, comprenant un corps canalisé (1), en coupe en U, comportant sur une de ses parois (2) des fentes transversales (3), et sur la paroi opposée des ouvertures (5) opposées aux fentes (3), entre les paires d'ouvertures (5) et de fentes (3) étant assemblées des pales (7) qui sont reliées les unes aux autres au moyen de tirants de transmission (21) et qui peuvent s'incliner entre une position extraite, dans laquelle elles reposent contre des butées longitudinales (17) du corps canalisé (1), et une position rétractée, dans laquelle elles sont pliées vers le haut sur lesdites butées (17), ledit corps comportant en outre un angle longitudinal extérieur (8) le long d'une de ses parois, faisant saillie de manière frontale par rapport aux butées longitudinales (17) des pales (7) et servant de guide pour les parties à stocker, dans laquelle le corps canalisé (1) et ledit angle longitudinal (8) forment une même partie formée à partir d'une même pièce, l'angle longitudinal (8) étant formé par une extension longitudinale frontale de la paroi (2) qui comporte lesdites fentes transversales (3), dont l'extension présente un pli transversal à approximativement 90° vers l'extérieur, qui est situé sur l'extérieur du bord longitudinal de l'autre paroi (2) et détermine une aile longitudinale extérieure pour servir de guide pour les parties à transporter ; et le long de la surface intérieure de ladite paroi est fixée une barre plate (17), dont le bord extérieur (19) définit la butée d'un côté des pales (7), alors que le bord intérieur délimite avec le fond des fentes le passage pour l'arbre (6) desdites pales (7).

2. Colonne selon la revendication 1, **caractérisée en ce que** les tirants (21) reliant deux pales consécutives (7) se composent de barres plates se terminant sur une extrémité par une aile coplanaire (22') qui fait saillie perpendiculairement depuis un des bords longitudinaux, et sur le bord opposé par deux ailes (27), proches l'une de l'autre, qui font saillie perpendiculairement depuis le bord longitudinal opposé.
